# NEUE EUROPÄISCHE PATENTSCHRIFT

(11) **EP 0 707 784 B2**
(45) Veröffentlichungstag und Bekanntmachung des Hinweises auf die Entscheidung über den Einspruch: **06.12.2000**
(45) Hinweis auf die Patenterteilung: 18.06.1997
(21) Anmeldenummer: 95115766.8
(22) Anmeldetag: 06.10.1995
(51) Int. Cl.: A01C 7/20

(54) **Sämaschine für den Einsatz in der Landwirtschaft**
Seeder for agricultural use
Semoir pour l'utilisation agricole

(30) Priorität: 17.10.1994 US 324042
(43) Veröffentlichungstag der Anmeldung: 24.04.1996
(73) Patentinhaber: DEERE & COMPANY, Moline, Illinois 61265 (US)
(72) Erfinder: Gamino, Rolando Paul, East Moline, Illinois 61244 (US)
(74) Vertreter: Feldmann, Bernhard

(56) Entgegenhaltungen:
- WO-A-85/00345
- DD-A- 98 566
- DE-A- 3 416 219
- DE-A- 3 701 217
- GB-A- 2 030
- US-A- 216 851
- US-A- 442 837
- US-A- 1 160 611
- US-A- 1 851 404
- US-A- 2 861 527
- US-A- 3 804 036

## Beschreibung

Die Erfindung bezieht sich auf eine Sämaschine für den Einsatz in der Landwirtschaft mit einer Einrichtung zum Ziehen einer Furche, mit einem Saatrohr und mit einem Saatzuführrohr, wobei das Saatrohr aus einem das Saatgut in die Furche leitenden Grundrohr oder Abschnitt und aus einem sich an das Grundrohr anschließenden erweiterten Abschnitt besteht.

Bei Einzelkornsämaschinen oder Sämaschinen im allgemeinen wird Saatgut in eine zum Ablegen gezogene Furche durch ein Saatrohr gelangen. In das Saatrohr gelangt Saatgut aus einer Zumeßeinrichtung, die mit einem Saatzuführrohr ausgestattet ist, wobei Saatzuführrohr und Saatrohr über einen Gummischlauch miteinander in Verbindung stehen. Der Gummischlauch ist mit den beiden Rohren über Schlauchklemmen verbunden. Eine derartige Verbindung der beiden Rohre ist aufwendig, da dazu wenigstens drei Teile benötigt werden, und zwar zwei jeweils von Hand feststellbare Schlauchklemmen und der Gummischlauch.

Eine Sämaschine gemäß dem Oberbegriff des Anspruchs 1 ist aus der DE-A-3 701 217 bekannt. Dort wird das Saatrohr an einem manschettenartigen Körper, der am Gestell der Sämaschine befestigt ist, gehalten und das Saatzuführrohr wird in das Saatrohr hineingesteckt.

In der DE-A-2 807 255 ist eine Sämaschine beschrieben, bei der sich das Saatzuführrohr bis zur Saatfurche erstreckt. Es verläuft durch ein oberhalb der Saatfurche angeordnetes Rohr, in dem es durch eine Niete fixiert wird.

Die US-A-5 092 255 offenbart eine Sämaschine, bei der das Saatzuführrohr ebenfalls bis zu einem geringfügig über der Saatfurche liegenden Ende verläuft. Das Saatzuführrohr wird durch eine Schraube fixiert.

In der US-A-442 837 wird eine Kopplung für zwei Rohre vorgeschlagen. Die zwei Rohre werden durch eine Muffe aneinander fixiert. Die Muffe hat an beiden Stirnseiten ausgestanzte, nach innen weisende Zungen, die in Löcher des Rohrs eingreifen. Ein Herausziehen des Rohres aus der Muffe ist somit nicht möglich.

Die US-A-2 359 117 beschreibt einen Hammer, bei dem ein Hammerkopf an einem Stiel befestigt ist. Der Stiel wird in den Kopf eingesetzt, und dann werden zungenartige Elemente, die in der Seitenfläche des Kopfes vorgesehen sind, in den Stiel getrieben. Ein Abnehmen des Kopfes ist danach nicht mehr möglich.

Die mit der Erfindung zu lösende Aufgabe wird in einer einfachen Verbindung von Saatrohr und Saatzuführrohr gesehen, wobei nach einem weiteren Aspekt der Zusammenbau leicht und einfach auszuführen ist.

Hierzu ist deshalb vorgesehen, daß die Sämaschine gemäß der Lehre des Kennzeichens nach Anspruch 1 ausgeführt ist.

Auf diese Weise kann auf den Gummischlauch und die Schlauchklemmen verzichtet werden.

Ein besonders einfaches Einführen des Saatzuführrohres in das Saatrohr wird nach einem weiteren Vorschlag dadurch erreicht, daß der erweiterte Abschnitt des Saatrohres mit einer trichterförmigen Öffnung versehen ist.

Ein weiterer erfindungsgemäßer Vorschlag sieht vor, daß der erweiterte Abschnitt im Bereich seines Übergangs in das Grundrohr mit einem eingeschnürten und einen Anschlag für das Saatzuführrohr bildenden Teil versehen ist. Auf diese Weise kann ein Monteur das Saatrohr und das Saatzuführrohr leicht zusammenfügen. Er braucht lediglich das Saatzuführrohr in das Saatrohr zu stecken bzw. umgekehrt, bis daß das eine Rohr gegen den Anschlag anstößt. Die Zungen halten dann in dieser Lage beide Rohre dauerhaft zusammen. Werkzeuge sind hierzu nicht erforderlich.

Von Vorteil ist es, wenn das Saatrohr aus Metall und daß das Saatzuführrohr aus Kunststoff besteht.

Die Zungen oder Heftzapfen können dreieckförmig ausgebildet sein.

Im einzelnen kann das Saatrohr zylindrisch ausgebildet sein, wobei das Grundrohr einen kleineren Innendurchmesser als der erweiterte Abschnitt aufweist. Auch das Saatzuführrohr kann zylindrisch ausgebildet sein und einen Außendurchmesser aufweisen, der geringfügig kleiner ist als der Innendurchmesser des erweiterten Abschnittes des Saatrohres.

Zweckmäßig ist es, wenn der erweiterte Abschnitt des Saatrohres mit vier Zungen oder Heftzapfen versehen ist.

In der Zeichnung ist ein nachfolgend näher erläutertes Ausführungsbeispiel der Erfindung dargestellt. Es zeigt:
- Fig. 1: eine Einrichtung zum Öffnen einer Saatfurche an einer nicht weiter dargestellten Sämaschine mit einem Saatrohr und einem Saatzuführrohr, die selbsthemmend miteinander verbunden sind,

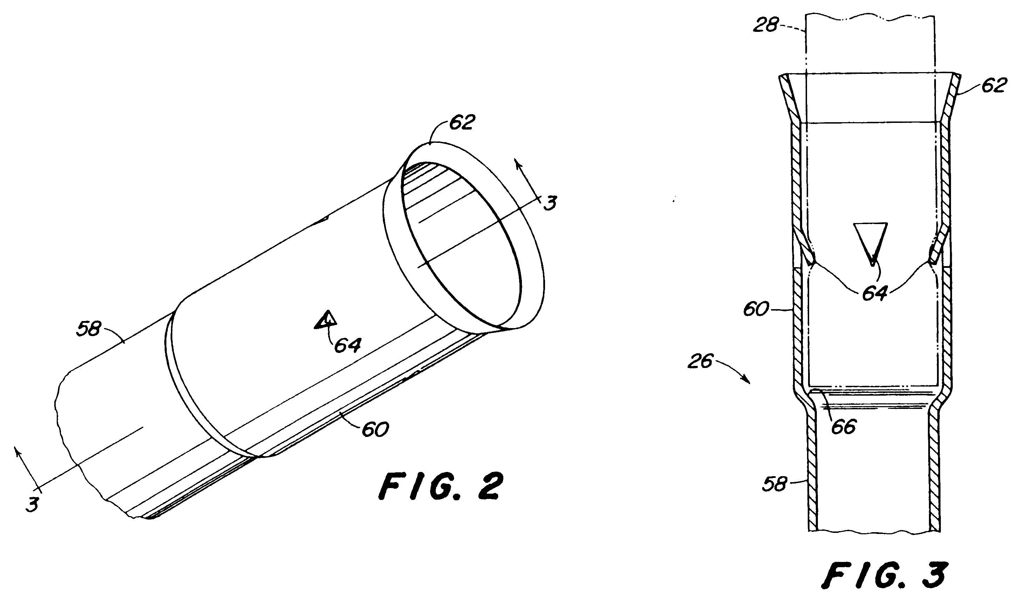

- Fig. 2: einen erweiterten Abschnitt des Saatrohres in perspektivischer Darstellung und
- Fig. 3: das mit dem Saatzuführrohr zusammengefügte Saatrohr im Querschnitt.

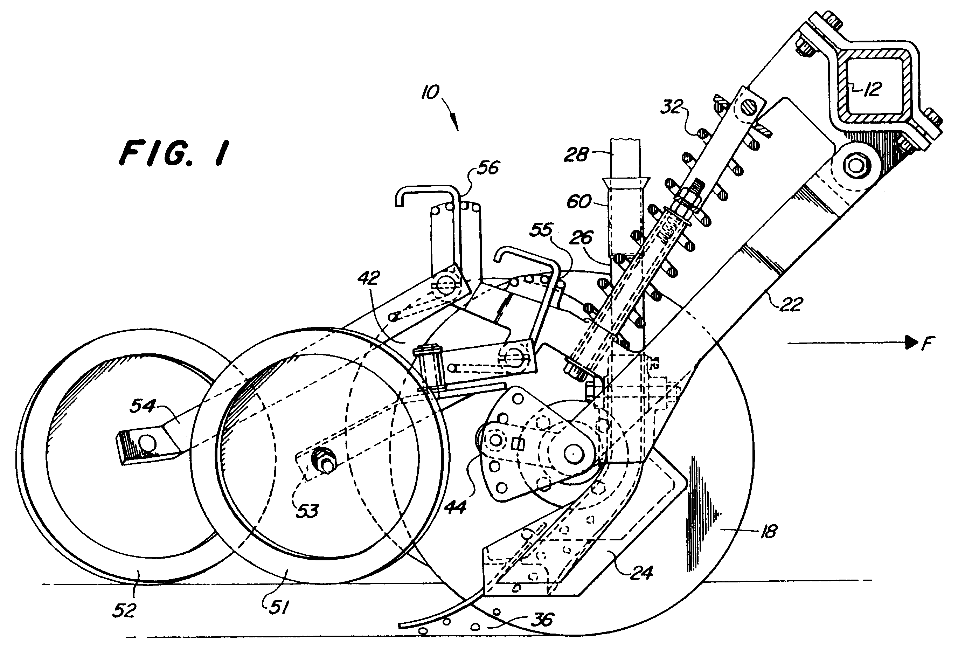

In Fig. 1 der Zeichnung ist eine Maschine für die Bodenbestellung in Form einer Sämaschine teilweise dargestellt. Man erkennt eine Einrichtung 10 zum Öffnen einer Furche, die an einem Rahmenteil 12 angeschlossen ist. Der Rahmenteil kann Teil einer Einzelkornsämaschine oder dergleichen sein, die über einen zu bestellenden Ackerboden in Richtung des Pfeils F fortbewegt wird. Derartige Maschinen und insbesondere die Einrichtung zum Furchenöffnen gehen aus dem Dokument US-A-4 760 806 hervor, auf das deshalb Bezug genommen wird. Ein schräg stehender Furchenöffner mit wenigstens einer Scheibe, die um eine mit Bezug auf die Querrichtung winklig angeordnete Achse im Einsatz umlaufen kann, ist mit 18 bezeichnet und an einem Zugarm 22 nachschleppend angeordnet. Ein Saatschuh 24 ist in unmittelbarer Nähe der Scheibe des Furchenöffners 18 im Schatten der vorlaufenden Kante der Scheibe angeordnet. Der Saatschuh 24 ist mit einem Saatrohr 24 aus Metall ausgestattet, das über ein Saatzuführrohr 28 aus Kunststoff mit einem in der Zeichnung nicht dargestellten Saatgutbehälter zur dosierten Zufuhr von Saatgut verbunden ist.

Eine Federeinrichtung 32 ist derart ausgebildet, daß sie auf den Furchenöffner 18 eine bodenwärts gerichtete Kraft ausübt, damit die Scheibe des Furchenöffners 18 im Einsatz zum Schneiden einer Furche 36 in den Boden eindringen kann. Ein Tiefensteuerrad 42 ist außen neben der Scheibe des Furchenöffners 18 drehbar vorgesehen, wobei jedoch die Drehachse des Tiefensteuerrades gegenüber der Drehachse der Scheibe nach rückwärts versetzt angeordnet ist. Die Furchentiefe selbst wird dabei über eine Einstellvorrichtung 44 kontrolliert, über die die Drehachse des Tiefensteuerrades 42 vertikal gegenüber der Scheibe des Furchenöffners verstellt werden kann.

Rückwärtig der Scheibe des Furchenöffners 18 sind noch ein Andrückrad 51 für das Saatgut und ein Zustreichrad 52 vorgesehen, die an den unteren Enden von schräg nach rückwärts gerichteten Armen 53 und 54 gelagert sind. Während des Einsatzes läuft das Andrückrad 51 in der zuvor gezogenen Furche, damit das einzelne Saatgut in den Furchenboden gedrückt wird, um einen guten Kontakt des Saatgutes mit dem Erdreich zu erhalten. Das Zustreichrad ist dazu bestimmt, die Furchenränder einzudrücken oder einstürzen zu lassen, damit das Saatgut mit einer lockeren Schicht Erdreich bedeckt wird. Weitere Federeinrichtungen 55 und 56 bestimmen die auf das Andrückrad 51 und auf das Zustreichrad 52 wirkenden und bodenwärts gerichteten Kräfte.

Es wurde bereits vorstehend darauf verwiesen, daß der Saatschuh 24 mit einem Saatrohr 26 aus Metall versehen ist. Dieses Saatrohr erstreckt sich, von dem Furchenöffner 18 aus gesehen, nach oben und besteht aus einem Grundrohr oder Abschnitt 58, um das Saatgut oder gegebenenfalls einzelne Saatkörner in die durch den Furchenöffner 18 gezogenen Furche zu lenken, und aus einem erweiterten Abschnitt 60, der dazu dient, das Saatrohr 26 in einfacher Weise mit dem Saatzuführrohr 28 zu verbinden. Das Saatrohr 26 ist dabei zylindrisch ausgebildet, wobei der Durchmesser des erweiterten Abschnittes 60 größer ist als der des Grundrohres 58. Außerdem ist der erweiterte Abschnitt 60 des Saatrohres an seinem dem Saatschuh abgelegenen Ende noch mit einer trichterförmigen Öffnung 62 und in seiner Mitte oder etwa auf halber Höhe mit vier auf seinem inneren Umfang verteilten Zungen oder Heftzapfen 64 versehen, die dreieckförmig ausgebildet und durch entsprechende Einschnitte in den Mantel des erweiterten Abschnittes hergestellt werden können. Der Bereich, in dem der erweiterte Abschnitt 60 in das Grundrohr 58 übergeht, ist kegelig gestaltet, so daß hier ein Anschlag 66 entsteht.

Das aus Kunststoff bestehende Saatzuführrohr 28 weist einen Durchmesser auf, der in etwa dem des Grundrohres 58 des Saatrohres 26 entspricht. Um nun beide Rohre, d. h. das Saatrohr und das Saatzuführrohr miteinander verbinden zu können, muß ein Monteur das aus Kunststoff bestehende Saatzuführrohr lediglich in den erweiterten Abschnitt 60 des Saatrohres 26 drücken oder pressen, bis es gegen den Anschlag 66 zu liegen kommt. Die nach innen vorstehenden Heftzapfen 64 halten dann in dieser Stellung das Saatzuführrohr fest, wobei eine äußerst einfache und dauerhafte Verbindung entsteht.

## Patentansprüche

1. Sämaschine für den Einsatz in der Landwirtschaft mit einer Einrichtung (10) zum Ziehen einer Furche (36), mit einem Saatrohr (26) und mit einem Saatzuführrohr (28), wobei das Saatrohr (26) aus einem das Saatgut in die Furche (36) leitenden Grundrohr oder Abschnitt (58) und aus einem sich an das Grundrohr (58) anschließenden erweiterten Abschnitt (60) besteht, dadurch gekennzeichnet, daß der erweiterte Abschnitt (60) mit nach innen vorstehenden Zungen oder Heftzapfen (64) versehen ist, daß das Saatzuführrohr (28) im montierten Zustand im erweiterten Abschnitt (60) durch die Zungen oder Heftzapfen (64) gehalten ist, daß die Zungen oder Heftzapfen durch dreieckförmige spitz zulaufende Einschnitte in den erweiterten Abschnitt (60) hergestellt sind und im montierten Zustand an der Außenwandung des Saatzuführrohres (28) anliegen.

2. Sämaschine nach Anspruch 1, dadurch gekennzeichnet, daß der erweiterte Abschnitt (60) des Saatrohres (26) mit einer trichterförmigen Öffnung (62) versehen ist.

3. Sämaschine nach Anspruch 1 oder 2, dadurch gekennzeichnet, daß der erweiterte Abschnitt (60) im Bereich seines Übergangs in das Grundrohr (58) mit einem eingeschürten und einen Anschlag (66) für das Saatzuführrohr (28) bildenden Teil versehen ist.

4. Sämaschine nach einem oder mehreren der vorherigen Ansprüche, dadurch gekennzeichnet, daß das Saatrohr (26) aus Metall und daß das Saatzuführrohr (28) aus Kunststoff besteht.

5. Sämaschine nach einem oder mehreren der vorherigen Ansprüche, dadurch gekennzeichnet, daß das Saatrohr (26) zylindrisch ausgebildet ist, wobei das Grundrohr (58) einen kleineren Innendurchmesser als der erweiterte Abschnitt (60) aufweist.

6. Sämaschine nach Anspruch 5, dadurch gekennzeichnet, daß das Saatzuführrohr (28) zylindrisch ausgebildet ist und einen Außendurchmesser aufweist, der geringfügig kleiner ist als der Innendurchmesser des erweiterten Abschnittes (60) des Saatrohres (26).

7. Sämaschine nach Anspruch 1, dadurch gekennzeichnet, daß der erweiterte Abschnitt (60) des Saatrohres (26) mit vier Zungen oder Heftzapfen (64) versehen ist.

## Claims

1. A seed drill for use in agriculture, with a device (10) for drawing a furrow (36), a seed tube (26) and a seed feed tube (28), wherein the seed tube (26) consists of a ground tube or section (58) feeding the seed into the furrow (36) and a widened section (60) adjoining the ground tube (58), characterized in that the widened section (60) is provided with inwardly projecting tongues or tines (64), that the seed feed tube (28) is held in a mounted state in the widened section (60) by the tongues of tines (64), that the tongues or tines (64) are made up by triangular tapered cuts within the widened section (60) and adjoin the outer wall of the seed feed tube (28) in a mounted state.

2. A seed drill according to claim 1, characterized in that the widened section (60) of the seed tube (26) is provided with a funnel-shaped opening (62).

3. A seed drill according to claim 1 or 2, characterized in that the widened section (60) is provided with a portion which is necked in and forms a stop (66) for the seed feed tube (28) in the region of its transition into the ground tube (58).

4. A seed drill according to one or more of the preceding claims, characterized in that the seed tube (26) consists of metal and the seed feed tube (28) consists of plastics material.

5. A seed drill according to one or more of the preceding claims, characterized in that the seed tube (26) is of cylindrical form, wherein the ground tube (58) has a smaller diameter than the widened section (60) of the seed tube (26).

6. A seed drill according to claim 5, characterized in that the seed feed tube (28) is of cylindrical form and has an external diameter which is slightly smaller than the internal diameter of the widened section (60) of the seed tube (26).

7. A seed drill according to claim 1, characterized in that the widened section (60) of the seed tube (26) is provided with four tongues or tines (64).

## Revendications

1. Semoir destiné à être utilisé en agriculture, comportant un dispositif (10) pour tracer un sillon (36), comportant un tube à semence (26) et un tube (28) d'amenée de la semence, le tube à semence (26) étant constitué par un tube de base ou élément (58), qui dirige la semence dans le sillon (36), et un élément élargi (60) qui se raccorde au tube de base (58), caractérisé en ce que l'élément élargi (60) comporte des languettes ou des ergots de retenue (64), qui sont saillants intérieurement, qu'à l'état monté, le tube (28) d'amenée de la semence est retenu dans l'élément élargi au moyen des languettes ou des ergots de retenue (60), et que les languettes ou les ergots de retenue sont formés par des entailles se terminant en pointe, de forme triangulaire, dans l'élément élargi (60) et, à l'état monté, s'appliquent contre la paroi extérieure du tube (28) d'amenée de la semence (28).

2. Semoir selon la revendication 1, caractérisé en ce que l'élément élargi (60) du tube à semence (26) comporte une ouverture en forme d'entonnoir (62).

3. Semoir selon la revendication 1 ou 2, caractérisé en ce que l'élément élargi (60) comporte, dans la zone de jonction avec le tube de base (58), une partie rétrécie, qui forme une butée (66) pour le tube (28) d'amenée de la semence.

4. Semoir selon une ou plusieurs des revendications précédentes, caractérisé en ce que le tube à semence (26) est en métal et le tube (28) d'amenée de la semence est en matière plastique.

5. Semoir selon une ou plusieurs des revendications précédentes, caractérisé en ce que le tube à semence (26) a une forme cylindrique, le tube de base (58) possédant un diamètre intérieur inférieur à celui de l'élément élargi (60).

6. Semoir selon la revendication 5, caractérisé en ce que le tube (28) d'amenée de la semence possède une forme cylindrique et a un diamètre extérieur légèrement inférieur au diamètre de l'élément élargi (60) du tube à semence (26).

7. Semoir selon la revendication 1, caractérisé en ce que l'élément élargi (60) du tube à semence (26) est pourvu de quatre languettes ou ergots de retenue (64).
